# EUROPEAN PATENT SPECIFICATION

(11) **EP 4 490 235 B1**
(45) Date of publication and mention of the grant of the patent: **21.01.2026**
(21) Application number: 24716639.0
(22) Date of filing: 15.03.2024
(51) Int. Cl.: B29K 67/00, C08L 67/02, B29C 45/00

(54) **INJECTION MOLDED ARTICLE**
SPRITZGUSSARTIKEL
ARTICLE MOULÉ PAR INJECTION

(30) Priority: 15.03.2023 EP 23161982
(43) Date of publication of application: 15.01.2025
(73) Proprietor: OceanSafe AG, 3014 Bern (CH)
(72) Inventor: SCHWEIZER, Manuel, 3063 Ittigen (CH)
(74) Representative: Schiweck Weinzierl Koch Patentanwälte Partnerschaft mbB
(86) International application number: PCT/EP2024/056895
(87) International publication number: WO 2024/189176

(56) References cited:
- WO-A1-2021/226722
- US-A1- 2018 127 554
- US-B2- 11 279 823

## Description

### CROSS-REFERENCE TO RELATED APPLICATION

The present application claims the benefit of priority of EP Patent Application No. 23161982.6 filed 15 March 2023.

### TECHNICAL FIELD

The present invention relates to an injection molded article comprising an aliphatic polyester, an aliphatic-aromatic polyester and a polyhydroxyalkanoate. The present invention also relates to methods for preparing such an injection molded article.

### BACKGROUND

The amount of plastic waste has substantially increased in recent years due to an increase in usage of various plastic products. Generally, plastic wastes are processed by landfilling, incineration or recycling. However, in the case of landfill, the decomposition time of the plastic waste takes a long time, which leads to a shortage of landfill space and causes soil pollution. Incineration generates toxic gases, which in turn increases air pollution as well as global warming. Recycling does not only have a great deal of difficulty in collecting and separating, but usually also requires high amounts of energy and chemicals. It is therefore necessary to consider sustainable plastics, which should be based on ecological, economic and social sustainability. A sustainable product should take these factors into account from raw material to processing, finishing, sales and recycling.

Sustainable plastics include, for example, bioplastics such as e.g. starch-based plastics, cellulose-based plastics and other polysaccharide-based plastics including, for example, chitosan and alginate. However, although these materials are used in various products including, for example, starch-based films which can be used for packaging purposes and starch-based nanocomposites, there are still various drawbacks. For example, pure starch-based bioplastic is brittle.

WO 2021/226722 A1 discloses a gas barrier substrate, wherein the polymeric matrix comprises a ternary blend of PBSA/PBAT/PHBV, or a quaternary blend of PLA/PBS/PBAT/PHBV. US 2018/127554 A1 discloses quaternary blends based on a combination of four biodegradable polymers, PHBV, PLA, PBAT, and PBS. US 11279823 B2 discloses a nano-blend of two or more biopolymers comprising PBAT, PBS and further including poly(3-hydroxybutyrate-co-3-hydroxyvalerate) (PHBV).

It is further desirable that sustainable plastic articles, such as e.g. injection molded articles, are suitable for being used under the concept of a circular economy. In particular, it is desirable that plastic articles can be used in the biological cycle, e.g. under the cradle-to-cradle design, by exhibiting suitable biodegradability and thus avoiding non-degradable waste. A beneficial guidance of a plastic article into the biological cycle is achieved when the plastic product is returned after expiry of its life cycle and fed to industrial composting. This produces biomass and biogas (CH₄, CO₂, water), which can be fed directly into the biological cycle.

Thus, there is an ongoing need for plastic articles which, in particular, address ecological requirements. It is thus an object of the invention to provide such a plastic article.

### SUMMARY

This object is accomplished by an injection molded article and methods having the features of the independent claims.

In a first aspect, the present invention relates to an injection molded article being made from a mixture comprising an aliphatic polyester, an aliphatic-aromatic polyester, and a polyhydroxyalkanoate.

In a second aspect, the present invention relates to a method of preparing an injection molded article according to the invention, comprising injection molding of a mixture comprising an aliphatic polyester, an aliphatic-aromatic polyester, and a polyhydroxyalkanoate.

In a third aspect, the present invention relates to an injection molded article obtainable or being obtained by a method according to the invention.

In a fourth aspect, the present invention relates to a use of a mixture comprising an aliphatic polyester, an aliphatic-aromatic polyester, and a polyhydroxyalkanoate for the preparation of an injection-molded article, wherein the injection-molded article is as defined herein.

In a fifth aspect, the present invention relates to a use of a mixture comprising an aliphatic polyester, an aliphatic-aromatic polyester, and a polyhydroxyalkanoate for injection molding.

### BRIEF DESCRIPTION OF THE DRAWINGS

The invention will be better understood with reference to the detailed description when considered in conjunction with the non-limiting examples and the drawings, in which:

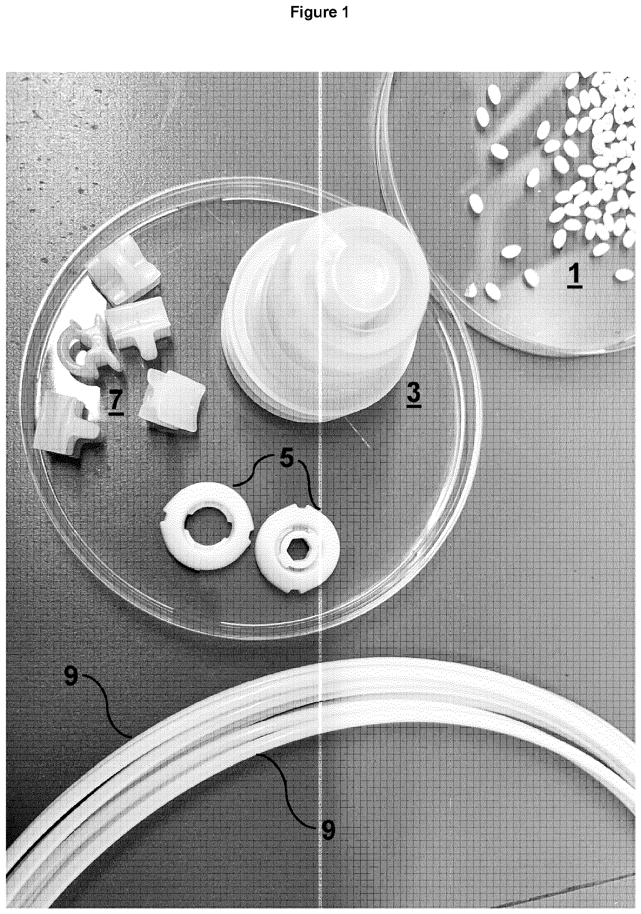

**Figure 1** shows a photograph of granules 1 of a mixture that can be used for preparing an injection molded article in accordance with embodiments of the invention, and injection molded articles 3, 5, 7 and 9 in accordance with embodiments of the invention. Accordingly, **Figure 1** shows coffee capsules 3, a push button 5 comprising two parts, curtain gliders 7, and zippers 9.

### DETAILED DESCRIPTION

As set out above, in a first aspect the present invention relates to an injection molded article being made from a mixture comprising an aliphatic polyester, an aliphatic-aromatic polyester, and a polyhydroxyalkanoate.

It has been found that a mixture comprising an aliphatic polyester, an aliphatic-aromatic polyester and a polyhydroxyalkanoate is well suited for injection molding. Accordingly, it has been found that a mixture comprising an aliphatic polyester, an aliphatic-aromatic polyester and a polyhydroxyalkanoate is well suited for preparing injection molded articles. In particular, it has been found that injection molded articles being made from a mixture comprising an aliphatic polyester, an aliphatic-aromatic polyester and a polyhydroxyalkanoate have a good strength and ductility (or flexibility). Injection molded articles having different shapes and applications can be produced from a mixture comprising an aliphatic polyester, an aliphatic-aromatic polyester and a polyhydroxyalkanoate. It is even possible to prepare thin-walled articles by injection molding of a mixture comprising an aliphatic polyester, an aliphatic-aromatic polyester and a polyhydroxyalkanoate. Further, by using an aliphatic polyester, aliphatic-aromatic polyester, and a polyhydroxyalkanoate, an injection molded article can be obtained which is biodegradable and even meets the harmonized European standard, EN 13432 and can thus be treated in industrial composting plants. In this context it is noted that various products, such as e.g. plates, foils or fibers, which comprise one or more of an aliphatic polyester, aliphatic-aromatic polyester, and/or a polyhydroxyalkanoate are described, e.g., in EP 3 626 767, WO 20101034689, WO 2010/034711, WO 2015/169660, EP 1 966 419, EP 2 984 138, CN 103668540, CN 103668541, WO 2014/173055 and CN 104120502.

A mixture for preparing the injection molded article can be produced using any method for producing a mixture suitable for injection molding which is known to a person skilled in the art. As an illustrative example, the aliphatic polyester, aliphatic-aromatic polyester and polyhydroxyalkanoate can be blended in the solid state, e.g. by mixing granules of the polymers, optionally with addition of one or more further additives. Optionally, the polymers and, if present, the additive(s) may be dried before the mixing. Then, for preparing the injection molded article, the mixture can be subjected to injection molding using, for example, a conventional injection molding machine, as generally known to a person skilled in the art. During the process, the mixture is usually heated to or above the melting point(s) of the polymers, and the mixture is kneaded. In other words, for injection molding, the mixture is typically subjected to melt-kneading in the injection molding machine. As an illustrative example, the mixture may be heated to a temperature of about 170 to 190 °C, such as e.g. 182°C. The obtained melt is then injected into a mold having the desired shape, to prepare an injection molded article. The mold can be made of any material which is generally known in the art as being suitable for use in injection molding. Optionally, the mold may be cooled using suitable cooling means, such as e.g. water cooling. For example, the mold may be cooled to about 40 to 50°C, such as e.g. 44°C. Optionally, after removal of the mold, the obtained injection molded article may be dried.

The term "aliphatic polyester" as used herein in general refers to a polyester which is typically synthesized through a condensation polymerization of an aliphatic diol and an aliphatic dicarboxylic acid or an anhydride thereof. As an illustrative example, the aliphatic polyester as used herein may comprise an aliphatic C₂-C₂₀ dicarboxylic acid and an aliphatic C₂-C₁₂ diol. Preferably, the aliphatic diol is an aliphatic C₂-C₈ diol. More preferably, the aliphatic diol is an aliphatic C₂-C₆ diol. Even more preferably, the aliphatic diol is an aliphatic C₃ diol or an aliphatic C₄ diol. Aliphatic diols used in the aliphatic polyester may include, as illustrative examples, ethylene glycol, propylene glycol, 1,3-propanediol, 1,3-butanediol, 1,4-butanediol, 1,5 pentanediol, and 1,6-hexanediol. Preferably, the aliphatic diol is 1,3-propanediol or 1,4-butanediol. More preferably, the aliphatic diol is 1,4-butanediol. Preferably, the aliphatic dicarboxylic acid is an aliphatic C₂-C₁₂ dicarboxylic acid. More preferably, the aliphatic dicarboxylic acid is an aliphatic C₂-C₈ dicarboxylic acid, even more preferably an aliphatic C₄ dicarboxylic acid. Aliphatic dicarboxylic acids used in the aliphatic polyester may include, as illustrative examples, oxalic acid, malonic acid, succinic acid, glutaric acid, and adipic acid. Preferably, the aliphatic dicarboxylic acid is malonic acid or succinic acid. More preferably, the aliphatic dicarboxylic acid is succinic acid. Optionally, when the dicarboxylic acid is an aliphatic C₂-C₁₂ dicarboxylic acid, the aliphatic polyester may further comprise an additional aliphatic C₆-C₂₀ dicarboxylic acid, which is different from the C₂-C₁₂ dicarboxylic acid. The optional aliphatic C₆-C₁₂ dicarboxylic acids may include, as illustrative examples, adipic acid, suberic acid, azelaic acid, sebacic acid, brassylic acid and arachidonic acid. Preferably, the optional aliphatic C₆-C₁₂ dicarboxylic acids may include adipic acid, suberic acid, azelaic acid, sebacic acid and brassylic acid. The optional aliphatic C₂-C₁₂ dicarboxylic acid may be present in the aliphatic polyester at a ratio of from 0 to 10 mol-%, based on 100 mol-% of the total amount of aliphatic dicarboxylic acids in the aliphatic polyester. Optionally, the aliphatic polyester may further comprise a chain extender and/or a branching agent. Optional chain extenders and/or branching agents may include, as illustrative examples, a polyfunctional isocyanate, isocyanurate, oxazoline, carboxylic anhydride such as e.g. maleic anhydride, epoxide (in particular an epoxy-containing poly(meth)acrylate), an at least trihydric alcohol, and an at least tribasic carboxylic acid. The optional chain extender and/or branching agent may be present in the aliphatic polyester at a ratio of from 0 to 1% by weight based on 100% by weight of the combined amount of aliphatic dicarboxylic acid(s) and aliphatic diol. The term "aliphatic polyester" may also include a mixture of two or more different aliphatic polyesters. The aliphatic polyester may have a number average molecular weight (Mn) ranging from 2,500 to 150,000 g/mol, preferably from 5,000 to 100,000 g/mol, more preferably from 7,500 to 75,000 g/mol, still more preferably from 10,000 to 65,000 g/mol, even more preferably from 12,000 to 60,000 g/mol. The aliphatic polyester may have a weight average molecular weight (Mw) ranging from 5,000 to 300,000 g/mol, preferably from 10,000 to 250,000 g/mol, more preferably from 20,000 to 220,000 g/mol, still more preferably from 50,000 to 200,000 g/mol, even more preferably from 60,000 to 190,000 g/mol. The aliphatic polyester may have a polydispersity index (i.e. the ratio of the weight average molecular weight to the number average molecular weight (Mw/Mn)) ranging from 1 to 6, preferably from 1 to **4,** more preferably from 1.0 to 3.0, still more preferably from 1.2 to 2.0, even more preferably from 1.4 to 1.8.

Illustrative examples of aliphatic polyesters, which can be used in the present invention, may include an aliphatic polyester selected from the group consisting of a polybutylene succinate (PBS), a polyethylene oxalate, a polyethylene malonate, a polyethylene succinate, a polypropylene oxalate, a polypropylene malonate, a polypropylene succinate, a polybutylene oxalate, a polybutylene malonate, a polybutylene succinate-co-adipate (PBSA), a polybutylene succinate-co-azelate (PBSAz), a polybutylene succinate-co-brassylate (PBSBr), and any combination thereof. The aliphatic polyester may preferably be selected from the group consisting of a polybutylene succinate (PBS), a polybutylene succinate-co-adipate (PBSA), a polybutylene succinate-co-azelate (PBSAz), a polybutylene succinate-co-brassylate (PBSBr), and any combination thereof. In one preferred embodiment, the aliphatic polyester is a polybutylene succinate. The term "polybutylene succinate" as used herein in particular denotes a condensation product from the aliphatic dicarboxylic acid succinic acid and the aliphatic diol 1,4-butanediol. The aliphatic polyesters polybutylene succinate (PBS) and polybutylene succinate-co-adipate (PBSA) are commercially available, for example, from Showa Highpolymer as Blanche^{®}, and by Mitsubishi as GSPIa^{®}. The aliphatic polyester, in particular polybutylene succinate (PBS), may be obtained from renewable resources or from fossil resources. Preferably, an aliphatic polyester from renewable resources is used. More preferably, bio-based polybutylene succinate (PBS) produced from bio-based succinic acid and 1,4-butanediol, which is e.g. commercially available from Mitsubishi Chemicals under the tradename BioPBS^{™} FZ71, can be used. Preferably, the aliphatic polyester is biodegradable. In particular, polybutylene succinate (PBS) is a biodegradable aliphatic polyester.

Preferably, the injection molded article comprises the aliphatic polyester in an amount of from 30 to 70% by weight, based on 100% by weight of the combined amount of the aliphatic polyester, the aliphatic-aromatic polyester, and the polyhydroxyalkanoate. More preferably, the injection molded article comprises the aliphatic polyester in an amount of from 35 to 65% by weight, based on 100% by weight of the combined amount of the aliphatic polyester, the aliphatic-aromatic polyester, and the polyhydroxyalkanoate. Still more preferably, the injection molded article comprises the aliphatic polyester in an amount of from 40 to 60% by weight or 42 to 62% by weight, based on 100% by weight of the combined amount of the aliphatic polyester, the aliphatic-aromatic polyester, and the polyhydroxyalkanoate. Even more preferably, the injection molded article comprises the aliphatic polyester in an amount of from 45 to 55% by weight, based on 100% by weight of the combined amount of the aliphatic polyester, the aliphatic-aromatic polyester, and the polyhydroxyalkanoate. In particular, these ranges can be applied when the aliphatic polyester is a polybutylene succinate. In a preferred embodiment, the injection molded article comprises 52% by weight of a polybutylene succinate based on 100% by weight of the combined amount of the polybutylene succinate, an aliphatic aromatic polyester and a polyhydroxyalkanoate.

The term "aliphatic-aromatic polyester" as used herein in general refers to a polyester which is typically synthesized from an aliphatic diol, an aliphatic dicarboxylic acid and an aromatic dicarboxylic acid. As an illustrative example, the aliphatic-aromatic polyester may comprise an aliphatic C₂-C₂₀ dicarboxylic acid, an aromatic dicarboxylic acid and an aliphatic C₂-C₁₂ diol. Preferably, the aliphatic diol is an aliphatic C₂-C₈ diol. More preferably, the aliphatic diol is an aliphatic C₂-C₆ diol. Even more preferably, the aliphatic diol is an aliphatic C₃ diol or an aliphatic C₄ diol. Aliphatic diols used in the aliphatic-aromatic polyester may include, as illustrative examples, ethylene glycol, propylene glycol, 1,3-propanediol, 1,3-butanediol, 1,4-butanediol, 1,5 pentanediol, and 1,6-hexanediol. Preferably, the aliphatic diol is 1,3-propanediol or 1,4-butanediol. More preferably, the aliphatic diol is 1,4-butanediol. Preferably, the aliphatic dicarboxylic acid is an aliphatic C₂-C₁₂ dicarboxylic acid. More preferably, the aliphatic dicarboxylic acid is an aliphatic C₄-C₁₀ dicarboxylic acid, even more preferably an aliphatic C₆ dicarboxylic acid. Aliphatic dicarboxylic acids used in the aliphatic-aromatic polyester may include, as illustrative examples, glutaric acid, adipic acid, pimelic acid, azelaic acid, sebacic acid, brassylic acid, suberic acid, and itaconic acid. Preferably, the aliphatic dicarboxylic acid is adipic acid, azelaic acid, or sebacic acid. More preferably, the aliphatic dicarboxylic acid is adipic acid. Preferably, the aromatic dicarboxylic acid is terephthalic acid. The aromatic dicarboxylic acid, in particular terephthalic acid, may be present in the aliphatic-aromatic polyester in an amount of e.g. from 30 to 70 mol-%, preferably of from 40 to 60 mol- %, more preferably of from 40 to 55 mol-%, each based on 100 mol-% of the combined amount of the aliphatic dicarboxylic acid and the aromatic dicarboxylic acid. Optionally, the aliphatic polyester may further comprise a chain extender and/or a branching agent. Optional chain extenders may include, as illustrative examples, a di- or polyfunctional isocyanate, preferably hexamethylenediisocyanate. Optional branching agents may include, as illustrative examples, trimethylolpropane, pentaerythritol, and preferably glycerol. The optional chain extender and/or branching agent may be present in the aliphatic polyester at a ratio of from 0 to 1% by weight based on 100% by weight of the combined amount of the aliphatic dicarboxylic acid, the aromatic dicarboxylic acid, and the aliphatic diol. The term "aliphatic-aromatic polyester" may also include a mixture of two or more different aliphatic-aromatic polyesters. The aliphatic-aromatic polyester may have a number average molecular weight (Mn) ranging from 1,000 to 500,000 g/mol, preferably from 5,000 to 300,000 g/mol, more preferably from 5,000 to 100,000 g/mol, still more preferably from 10,000 to 75,000 g/mol, even more preferably from 15,000 to 50,000 g/mol. The aliphatic-aromatic polyester may have a weight average molecular weight (Mw) ranging from 10,000 to 500,000 g/mol, preferably from 20,000 to 400,000 g/mol, more preferably from 30,000 to 300,000 g/mol, still more preferably from 60,000 to 200,000 g/mol. The aliphatic-aromatic polyester may have a polydispersity index (i.e. the ratio of the weight average molecular weight to the number average molecular weight (Mw/Mn)) ranging from 1 to 6, preferably from 2 to **4,** more preferably from 1.0 to 3.0, still more preferably from 1.2 to 2.0, even more preferably from 1.4 to 1.8.

Aliphatic-aromatic polyesters, which can be used in the present invention, may include, but are not limited to, an aliphatic-aromatic polyester selected from the group consisting of a polybutylene adipate terephthalate (PBAT), a polybutylene succinate terephthalate (PBST), a polybutylene sebacate terephthalate (PBSeT), and any combination thereof. In one preferred embodiment, the aliphatic-aromatic polyester is a polybutylene adipate terephthalate (PBAT). The term "polybutylene adipate terephthalate" as used herein denotes an aliphatic-aromatic polyester which comprises the aliphatic dicarboxylic acid adipic acid, the aromatic dicarboxylic acid terephthalic acid, and the aliphatic diol 1,4-butanediol. The aliphatic-aromatic polyester, in particular polybutylene adipate terephthalate (PBAT), may be obtained from renewable resources or from fossil resources. Preferably, an aliphatic-aromatic polyester from renewable resources is used. Polybutylene adipate terephthalate (PBAT) is marketed, for example, by BASF as Ecoflex^{®}, e.g. Ecoflex^{®} F Blend C1200 or Ecoflex^{®} FBX 7011, or by Showa Denko as Bionolle^{®}. Preferably, the aliphatic-aromatic polyester is biodegradable. In particular, polybutylene adipate terephthalate (PBAT) is a biodegradable aliphatic-aromatic polyester.

Preferably, the injection molded article comprises the aliphatic-aromatic polyester in an amount of from 10 to 60% by weight, based on 100% by weight of the combined amount of the aliphatic polyester, the aliphatic-aromatic polyester, and the polyhydroxyalkanoate. More preferably, the injection molded article comprises the aliphatic-aromatic polyester in an amount of from 20 to 50% by weight, based on 100% by weight of the combined amount of the aliphatic polyester, the aliphatic-aromatic polyester, and the polyhydroxyalkanoate. Still more preferably, the injection molded article comprises the aliphatic-aromatic polyester in an amount of from 25 to 40% by weight or 26 to 46% by weight, based on 100% by weight of the combined amount of the aliphatic polyester, the aliphatic-aromatic polyester, and the polyhydroxyalkanoate. Even more preferably, the injection molded article comprises the aliphatic-aromatic polyester in an amount of from 30 to 40% by weight, based on 100% by weight of the combined amount of the aliphatic polyester, the aliphatic-aromatic polyester, and the polyhydroxyalkanoate. In particular, these ranges can be applied when the aliphatic-aromatic polyester is a polybutylene adipate terephthalate (PBAT). In a preferred embodiment, the injection molded article comprises 36% by weight polybutylene adipate terephthalate (PBAT) based on 100% by weight of the combined amount of an aliphatic polyester, the polybutylene adipate terephthalate (PBAT) and a polyhydroxyalkanoate.

The term "polyhydroxyalkanoate" as used herein in general refers to a polyester from hydroxyalkane carboxylic acid monomers. Polyhydroxyalkanoates can be produced by numerous microorganisms, including through bacterial fermentation of sugars or lipids. Preferably, the hydroxyalkane carboxylic acid is a C₄-C₁₈ hydroxyalkane carboxylic acid, i.e. preferably the hydroxyalkane carboxylic acid comprises 4 to 18 carbon atoms. More preferably, the polyhydroxyalkanoate comprises monomeric units having the following formula (I): 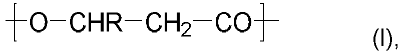 wherein R is an alkyl group having the formula CₙH₂ₙ₊₁, and n is an integer of from 1 to 15, preferably of from 1 to 6. In some embodiments, the polyhydroxyalkanoate is a homopolymer. In some preferred embodiments, the polyhydroxyalkanoate is a copolymer. When the polyhydroxyalkanoate is a copolymer, the copolymer may comprise two different monomeric units of formula (I). The term "polyhydroxyalkanoate" may also include a mixture of two or more different polyhydroxyalkanoates. The polyhydroxyalkanoate may have a weight average molecular weight (Mw) ranging from 70,000 to 1,000,000 g/mol, preferably from 100,000 to 1,000,000 g/mol, more preferably from 300,000 to 600,000 g/mol.

Illustrative examples of polyhydroxyalkanoates, which can be used in the present disclosure, may include a polyhydroxyalkanoate selected from the group consisting of a polyhydroxybutyrate, a polyhydroxyvalerate, a polyhydroxybutyrate-co-hydroxyvalerate, a polyhydroxybutyrate-co-hydroxyhexanoate, and any combination thereof. Preferably, the polyhydroxyalkanoate is selected from the group consisting of a poly-3-hydroxybutyrate (P3HB), a poly-4-hydroxybutyrate (P4HB), a poly-3-hydroxyvalerate (PHV), a poly(3-hydroxybutyrate-co-4-hydroxybutyrate), a poly(3-hydroxybutyrate-co-3-hydroxyvalerate) (PHBV), a poly(3-hydroxybutyrate-co-3-hydroxyhexanoate) (PHBH), and any combination thereof. Still more preferably, the polyhydroxyalkanoate is selected from the group consisting of a poly-3-hydroxybutyrate (PHB) 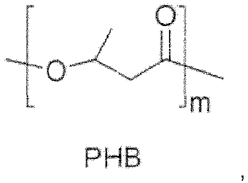
a poly(3-hydroxybutyrate-co-3-hydroxyvalerate) (PHBV) 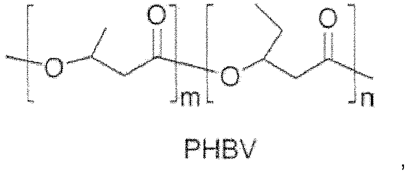 and
a poly(3-hydroxybutyrate-co-3-hydroxyhexanoate) (PHBH) 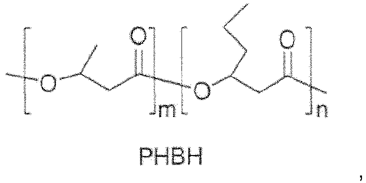 and
any combination thereof. Even more preferably, the polyhydroxyalkanoate is a polyhydroxybutyrate-co-hydroxyhexanoate. In a very preferred embodiment, the polyalkoxyalkanoate is a poly(3-hydroxybutyrate-co-3-hydroxyhexanoate) (PHBH). Preferably, the molar ratio m:n in the foregoing structural formulae is of from 95:5 to 85:15, more preferably of from 90:10 to 88:12. Preferably, a poly(3-hydroxybutyrate-co-3-hydroxyhexanoate) (PHBH) having a molar ratio of 3-hydroxyhexanoate of from 5 to 15 mol-%, preferably of from 7 to 13 mol-%, more preferably of from 10 to 13 mol-%, each based on 100 mol-% of the total amount of monomers in the poly(3-hydroxybutyrate-co-3-hydroxyhexanoate) (PHBH), is used. Poly(3-hydroxybutyrate-co-3-hydroxyhexanoate) (PHBH) is marketed by way of example by P&G or Kaneka. The polyhydroxyalkanoate, in particular poly(3-hydroxybutyrate-co-3-hydroxyhexanoate) (PHBH), may be obtained from renewable resources or fossil resources. Preferably, a polyhydroxyalkanoate from renewable resources is used. More preferably, bio-based poly(3-hydroxybutyrate-co-3-hydroxyhexanoate) (PHBH), which is e.g. commercially available from Kaneka under the tradename AONILEX X 151 A, can be used. Preferably, the polyhydroxyalkanoate is biodegradable. In particular, poly(3-hydroxybutyrate-co-3-hydroxyhexanoate) (PHBH) is a biodegradable polyhydroxyalkanoate.

Preferably, the injection molded article comprises the polyhydroxyalkanoate in an amount of from 1 to 25% by weight, based on 100% by weight of the combined amount of the aliphatic polyester, the aliphatic-aromatic polyester, and the polyhydroxyalkanoate. More preferably, the injection molded article comprises the polyhydroxyalkanoate in an amount of from 2 to 22% by weight, based on 100% by weight of the combined amount of the aliphatic polyester, the aliphatic-aromatic polyester, and the polyhydroxyalkanoate. Still more preferably, the injection molded article comprises the polyhydroxyalkanoate in an amount of 3 to 20 by weight, based on 100% by weight of the combined amount of the aliphatic polyester, the aliphatic-aromatic polyester, and the polyhydroxyalkanoate. Still more preferably, the injection molded article comprises the polyhydroxyalkanoate in an amount of from 3 to 18% by weight, based on 100% by weight of the combined amount of the aliphatic polyester, the aliphatic-aromatic polyester, and the polyhydroxyalkanoate. Even more preferably, the injection molded article comprises the polyhydroxyalkanoate in an amount of from 5 to 15% by weight, based on 100% by weight of the combined amount of the aliphatic polyester, the aliphatic-aromatic polyester, and the polyhydroxyalkanoate. In particular, these ranges can be applied when the polyhydroxyalkanoate is a polyhydroxybutyrate-co-hydroxyhexanoate, preferably a poly(3-hydroxybutyrate-co-3-hydroxyhexanoate) (PHBH). Preferably, when the polyhydroxyalkanoate is a polyhydroxybutyrate-co-hydroxyhexanoate, preferably a poly(3-hydroxybutyrate-co-3-hydroxyhexanoate) (PHBH), the injection molded article comprises 20% by weight or less, more preferably 18% by weight or less of the polyhydroxybutyrate-co-hydroxyhexanoate, preferably the poly(3-hydroxybutyrate-co-3-hydroxyhexanoate) (PHBH) based on 100% by weight of the combined amount of an aliphatic polyester, an aliphatic-aromatic polyester and the polyhydroxybutyrate-co-hydroxyhexanoate, preferably the poly(3-hydroxybutyrate-co-3-hydroxyhexanoate) (PHBH). If the ratio of the polyhydroxybutyrate-co-hydroxyhexanoate, preferably the poly(3-hydroxybutyrate-co-3-hydroxyhexanoate) (PHBH) exceeds 18% by weight, achieving the EN 13432 standard for biodegradability without pre-composting or industrial composting may become difficult, when exceeding 20% by weight still more difficult. In a preferred embodiment, the injection molded article comprises 12% by weight poly(3-hydroxybutyrate-co-3-hydroxyhexanoate) (PHBH) based on 100% by weight of the combined amount of a polybutylene succinate, a polybutylene adipate terephthalate and a poly(3-hydroxybutyrate-co-3-hydroxyhexanoate) (PHBH).

In one very preferred embodiment, the aliphatic polyester is a polybutylene succinate (PBS), the aliphatic-aromatic polyester is a polybutylene adipate terephthalate (PBAT), and the polyalkoxyalkanoate is a poly(3-hydroxybutyrate-co-3-hydroxyhexanoate) (PHBH). Accordingly, in one very preferred embodiment, the injection molded article comprises a polybutylene succinate (PBS), a polybutylene adipate terephthalate (PBAT), and a poly(3-hydroxybutyrate-co-3-hydroxyhexanoate) (PHBH).

The ranges for the amounts of the aliphatic polyester, the aliphatic-aromatic polyester and the polyhydroxyalkanoate may be also combined with each other. Accordingly, as illustrative examples, the injection molded article may comprise the aliphatic polyester in an amount of from 42 to 62% by weight, preferably 45 to 55% by weight, the injection molded article may comprise the aliphatic-aromatic polyester in an amount of from 26 to 46% by weight, preferably 30 to 40% by weight, and the injection molded article may comprise the polyhydroxyalkanoate in an amount of from 2 to 22% by weight, preferably 3 to 20% by weight, more preferably 3 to 18% by weight, each based on 100% by weight of the combined amount of the aliphatic polyester, the aliphatic-aromatic polyester and the polyhydroxyalkanoate. A person skilled in the art will readily select suitable amounts of one or more of the polymer(s) within the ranges provided herein, so that the total amount of 100% by weight of the combined amount of the aliphatic polyester, the aliphatic-aromatic polyester and the polyhydroxyalkanoate is not exceeded. In particular, these ranges can be applied when the aliphatic polyester is a polybutylene succinate, the aliphatic aromatic polyester is a polybutylene adipate terephthalate, and the polyhydroxyalkanoate is a polyhydroxybutyrate-co-hydroxyhexanoate, preferably a poly(3-hydroxybutyrate-co-3-hydroxyhexanoate) (PHBH). In a very preferred embodiment, the injection molded article comprises 52% by weight of a polybutylene succinate, 36% by weight of a polybutylene adipate terephthalate and 12% by weight of a polyhydroxybutyrate-co-hydroxyhexanoate, preferably a poly(3-hydroxybutyrate-co-3-hydroxyhexanoate) (PHBH), each based on 100% by weight of the combined amount of the polybutylene succinate, the polybutylene adipate terephthalate and the polyhydroxybutyrate-co-hydroxyhexanoate, preferably the poly(3-hydroxybutyrate-co-3-hydroxyhexanoate) (PHBH).

In some embodiments, the polyhydroxyalkanoate may be partially or totally replaced by a polylactide (PLA, or also known as polylactic acid or poly(lactic acid)). Accordingly, in some embodiments, when the polyhydroxyalkanoate is partially replaced by a polylactide, the injection molded article comprises the aliphatic polyester, the aliphatic-aromatic polyester, the polyhydroxyalkanoate, and a polylactide. In some embodiments, when the polyhydroxyalkanoate is totally replaced by a polylactide, the injection molded article comprises the aliphatic polyester, the aliphatic-aromatic polyester, and the polylactide. However, in embodiments where the polyhydroxyhexanoate is totally replaced by a polylactide, the injection molded article does not contain a polyhydroxyalkanoate.

Optionally, the injection molded article may further comprise at least one additive (one or more additives). For example, the injection molded article may comprise at least one additive (or one or more additives) that is generally known to be used in an injection molded article. The optional additives may include, but are not limited to, additives such as a flame retardant, a matting agent, a marker for authentication (e.g., a fluorescence marker), an antimicrobial agent, a plasticizer, a colorant, a filler, and any combination thereof.

Preferably, the injection molded article further comprises a flame retardant, for example, a flame retardant such as a phosphate. The term "phosphate" as used herein refers to a salt comprising an anion selected from the group consisting of [H₂PO₄]⁻, [HPO₄]²⁻ and [PO₄]³⁻. Preferably, the cation is ammonium [NH₄]⁺. Accordingly, in preferred embodiments, the flame retardant is selected from the group consisting of ammonium dihydrogenphosphate ([NH₄][H₂PO₄]), di-ammonium hydrogenphosphate ([NH₄]₂[HPO₄]), triammonium phosphate ([NH₄]₃[PO₄]) and any combination thereof. More preferably, the flame retardant is selected from the group consisting of ammonium dihydrogenphosphate ([NH₄][H₂PO₄]), di-ammonium hydrogenphosphate ([NH₄]₂[HPO₄]) and any combination thereof. More preferably, the flame retardant is ammonium dihydrogenphosphate ([NH₄][H₂PO₄]) or di-ammonium hydrogenphosphate ([NH₄]₂[HPO₄]). Still more preferably, the flame retardant is di-ammonium hydrogenphosphate ([NH₄]₂[HPO₄]). Alternatively, or in addition, the flame retardant may be a polyphosphate. "Polyphosphates" are salts or esters of polymeric oxyanions formed from tetrahedral PO₄ (phosphate) structural units linked together by sharing oxygen atoms. Preferably, when the flame retardant is a polyphosphate, the flame retardant is ammonium polyphosphate.

The injection molded article may comprise the flame retardant in an amount of from 0.01 to 5% by weight, based on 100% by weight on the total weight of the injection molded article. Preferably, the injection molded article comprises the flame retardant in an amount of from 0.1 to 4% by weight, based on 100% by weight of the total weight of the injection molded article. More preferably, the injection molded article comprises the flame retardant in an amount of from 0.2% to 3% by weight, based on 100% by weight of the total weight of the injection molded article. Still more preferably, the injection molded article comprises the flame retardant in an amount of from 0.3 to 3% by weight, based on 100% by weight of the total weight of the injection molded article. Even more preferably, the injection molded article comprises the flame retardant in an amount of from 0.3 to 2% by weight, based on 100% by weight of the total weight of the injection molded article. In particular, the foregoing ranges can be applied when the flame retardant is a phosphate or a polyphosphate, preferably, when the flame retardant is di-ammonium hydrogenphosphate ([NH₄]₂[HPO₄]).

Optionally, the injection molded article may (also) comprise a matting agent. Any matting agent known to a person skilled in the art can be used, such as a typical matting agent used in injection molded articles. As illustrative example, the matting agent may be zinc sulfide.

Optionally, the injection molded article may (also) comprise a marker suitable for authentication. As an illustrative non-limiting example, the marker suitable for authentication can be a fluorescence marker. Fluorescence of the injection molded article can then be detected by a suitable device and taken for authentication of the injection molded article. For example, a fluorescence marker available from Polysecure, Freiburg im Breisgau, Germany can be used. The marker suitable for authentication is generally used only in small amounts, which usually do not alter the properties of the injection molded article. Typically, the amount of the marker suitable for authentication in the injection molded article is in the ppb (parts per billion) range.

Optionally, the injection molded article may (also) include an antimicrobial agent. Any antimicrobial agent known to a person skilled in the art, which is suitable for being used in a injection molded article, can be used. As an illustrative non-limiting example, the antimicrobial agent may be zinc encapsulated with polyethylene terephthalate. Such matting agent, e.g., is commercially available from Smartpolymer GmbH, Rudolstadt, Germany, under the trade name SMARTZINC 213 PET Hot Melt.

Optionally, the injection molded article may (also) include a plasticizer. Any plasticizer known to a person skilled in the art, which is suitable for being used in an injection molded article, can be used. As an illustrative example, the plasticizer may be polycaprolactone. In particular, polycaprolactone is biodegradable. In some embodiments, the injection molded article may comprise polycaprolactone in an amount of 1% by weight or less based on 100% by weight of the total weight of the injection molded article. It has turned out that an injection molded article comprising 1% by weight or less of polycaprolactone exhibits satisfactory softness and flexibility. However, it is noted that an injection molded article in accordance with the present invention, which comprises an aliphatic polyester, an aliphatic-aromatic polyester and a polyhydroxyalkanoate, may usually already exhibit satisfactory softness and flexibility without addition of polycaprolactone or other plasticizers.

Optionally, the injection molded article may (also) include a colorant. Any colorant providing a desired color, which is suitable for being used in an injection molded article, may be used. As illustrative examples, the colorant may be an inorganic or an organic pigment.

Optionally, the injection molded article may (also) include a filler. Any filler known to a person skilled in the art, which is suitable for being used in an injection molded article, may be used. Biodegradable fillers are preferred. As illustrative example, the (biodegradable) filler may be lignin or may comprise lignin. Preferably, the lignin is oxygen-bleached lignin. Oxygen-bleaching of lignin is an environmentally friendly process, compared to traditional chlorine bleaching.

A person skilled in the art will readily select suitable amount(s) of the additive(s) to be comprised in the injection molded article. As an illustrative example, the injection molded article may comprise a total amount of additive(s) of 15% by weight or less, based on 100% by weight of the total weight of the injection molded article. The injection molded article may comprise a total amount of additive(s) of 10% by weight or less, based on 100% by weight of the total weight of the injection molded article. Preferably, the injection molded article comprises a total amount of additives of 7% by weight or less, based on 100% by weight of the total weight of the injection molded article. More preferably, the injection molded article comprises a total amount of additives of 5% by weight or less, based on 100% by weight of the total weight of the injection molded article. Still more preferably, the injection molded article comprises a total amount of additives of 4% by weight or less, based on 100% by weight of the total weight of the injection molded article. Even more preferably, the injection molded article comprises a total amount of additives of 3 to 4% by weight, based on 100% by weight of the total weight of the injection molded article. It is preferred that the injection molded article comprises a total amount of additives of 7% by weight or less, more preferably 3 to 4% by weight, each based on 100% by weight of the total weight of the injection molded article, in order to achieve a useful strength and ductility (or flexibility).

Preferably, the injection molded article is biodegradable. More preferably, the injection-molded article is biodegradable in accordance with EN 13432. Accordingly, the injection molded article may be considered as biodegradable in accordance with EN 13432 when the injection molded article has a DIN EN 13432 percentage degree of biodegradation equal to at least 90% after the prescribed periods of time. The general effect of biodegradability is that the injection molded article decomposes within an appropriate and verifiable interval. Degradation may be effected enzymatically, hydrolytically, oxidatively and/or through action of electromagnetic radiation, for example UV radiation, and may be predominantly due to the action of microorganisms such as bacteria, yeasts, fungi and algae. Biodegradability can be quantified, for example, by the injection molded article being mixed with compost and stored for a certain time. For example, CO₂-free air can be flowed through ripened compost during composting and the ripened compost subjected to a defined temperature program. Biodegradability can be, for example, defined via the ratio of the net CO₂ released by the sample (after deduction of the CO₂ released by the compost without sample) to the maximum amount of CO₂ releasable by the sample (reckoned from the carbon content of the sample), as a percentage degree of biodegradation. A biodegradable injection molded article typically shows clear signs of degradation, such as fungal growth, cracking and holing, after just a few days of composting. Other methods of determining biodegradability are described, for example, in ASTM D 5338 and ASTM D 6400.

The shape of the injection molded article is not particularly limited. Accordingly, any article, which is typically produced by injection molding, can be made from a mixture comprising an aliphatic polyester, an aliphatic-aromatic polyester, and a polyhydroxyalkanoate, as described herein. Suitable molds having desired shapes are known to a person skilled in the art or can be readily manufactured. As illustrative examples, the injection molded article may be selected from the group consisting of a button, a push button, a zipper, a wall support, a cap, a container, preferably a container for food or liquid, a preform, cutlery, a toothbrush, a curtain rod, a closure, a closure pin, a buckle, a hook, a roll, a glider, a packaging, a capsule, an article used in a laboratory, an article used in medical science, a personal protective equipment or a part thereof, an article used in the production of a textile, a part used in technology purposes, a part of an electric switch, and an article used in a garden.

In some embodiments, the injection molded article is a button. The injection molded article may be, for example, a push button.

In some embodiments, the injection molded article is a zipper. It has turned out that a zipper being made from a mixture comprising an aliphatic polyester, an aliphatic-aromatic polyester and a polyhydroxyalkanoate has an advantageous strength and ductility (or flexibility). In particular, strength and flexibility are comparable to polyamides (such as nylon), which are typically used for producing a zipper. As an example, the injection molded article may be a tape of a zipper.

In some embodiments, the injection molded article is a wall support. As an illustrative example, the injection molded article may be a wall support for sunscreen products.

In some embodiments, the injection molded article is a cap. The injection molded article may be, for example, an end cap for metal bars, such as e.g. metal bars in car seats, table legs, or the like. The injection molded article may be, for example, a protective cap.

In some embodiments, the injection molded article is a container. The injection molded article may be, for example, a transport container. Such containers are particularly useful in circular economy. The injection molded article may be a container for food, e.g. a canisters, a yoghurt pots, a fruit and/or vegetable packaging tray, an egg casing, or a candy encapsulation. Further, the injection molded article may be a container for liquids like beverages, e.g. a (disposable) glass or a container, like a recup, a to-go cup, or a champagne glass).

In some embodiments, the injection molded article is a preform. The preform may be a tube that will give rise to a container or a bottle made of this material. It is an intermediate product in the production chain. The preform is suitable for being blown to shape the final container or bottle, and the preform can vary in weight, color, and shape.

In some embodiments, the injection molded article is a cutlery. Accordingly, the injection molded article may be a knife, a fork or a spoon. Such cutlery is particularly useful as being biodegradable, and can thus be easily disposed of. Further, such cutlery may be a disposable cutlery or party cutlery.

In some embodiments, the injection molded article is a toothbrush.

In some embodiments, the injection molded article is a rod. The injection molded article may be, for example, a curtain rod.

In some embodiments, the injection molded article is a closure. The injection molded article may be, for example, a closure for a bottle. The injection molded article may be, for example, a closure pin.

In some embodiments, the injection molded article is a buckle. The injection molded article may be, for example, a pinch buckle or a bar buckle.

In some embodiments, the injection molded article is a hook.

In some embodiments, the injection molded article is a roll. The injection molded article may be, for example, a roll for a lawn mower.

In some embodiments, the injection molded article is a glider. The injection molded article may be, for example, a curtain glider.

In some embodiments, the injection molded article is a packaging. The injection molded article may be, for example, a packaging for cosmetics or pharmaceuticals.

In some embodiments, the injection molded article is a capsule. The injection molded article may be, for example, a coffee capsule or a tea capsule.

In some embodiments, the injection molded article is an article used in a laboratory. The injection molded article may be, for example, a (disposable) pipette, a (disposable) syringe, a dish, or a container.

In some embodiments, the injection molded article is an article used in medical science. The injection molded article may be, for example, a (disposable) pipette, a (disposable) syringe, an infusion bag, a tray or a container

In some embodiments, the injection molded article is a personal protective equipment or a part thereof or an article used in the production of a textile. The injection molded article may be as personal protective equipment, e.g. a helmet, a protector or a safety goggles housing, or as article used in the production of a textile, e.g. an industrial yarn cone or an industrial yarn cop, or a sewing machine accessory, like a bobbin, a thimble, a cap, or a housing.

In same embodiments, the injection molded article is a part used in technology purposes. The injection molded article may be, for example, a computer accessory or part thereof, like a keyboard, a mouse, a monitor, a computer housing, a toy, like a children toy, a part of a car interior, like a dashboard, a button or a switch.

In same embodiments, the injection molded article is a part of an electric switch. The injection molded article may be, for example, a housing of an electric switch.

In some embodiments, the injection molded article is an article used in a garden. The injection molded article may be, for example, a planter, like a Flower pot, or a watering can.

It has also turned out that a mixture comprising an aliphatic polyester, an aliphatic aromatic polyester and a polyhydroxyalkanoate can be injection molded into thin-walled articles. Accordingly, in some embodiments the injection molded article is a thin-walled article. The term "thin-walled article", as used herein, in general may refer to an injection molded article in which at least a part of the article has a wall thickness of less than about 2 mm, preferably of less than about 1 mm. In a thin-walled article at least a part of the article may have a wall thickness of more than about 0.1 mm, or more than about 0.2 mm, or more than about 0.3 mm, or more than about 0.4 mm, or more than about 0.5 mm. In some embodiments, in a thin-walled article at least a part of the article may have a wall thickness of about 0.1 mm to 2 mm, or 0.2 mm to 2 mm, or 0.3 mm to 1 mm, or 0.4 mm to 1 mm, or 0.5 mm to 1 mm.

The present invention also relates to a method of preparing an injection molded article according to the invention, comprising injection molding of a mixture comprising an aliphatic polyester, an aliphatic-aromatic polyester, and a polyhydroxyalkanoate, thereby obtaining the injection molded article.

For preparing the injection molded article, the mixture comprising an aliphatic polyester, an aliphatic-aromatic polyester, and a polyhydroxyalkanoate can be subjected to injection molding, for example, using a conventional injection molding machine, as generally known to a person skilled in the art. The injection molding may comprise melt-kneading of the mixture and injecting into a mold. During the method, the mixture is usually heated to or above the melting point(s) of the polymers, and the mixture is kneaded. As an illustrative example, the mixture may be heated to a temperature of about 170 or 180 to 190°C, such as e.g. 182°C. The obtained melt is then injected into a mold having the desired shape, to prepare an injection molded article. The mold can be made of any material which is generally known in the art as being suitable for use in injection molding. Optionally, the mold may be cooled using suitable cooling means, such as e.g. water cooling. For example, the mold may be cooled to about 40 to 50°C, such as e.g. 44°C. Optionally, after removal from the mold, the obtained injection molded article may be dried.

Preferably, the mixture comprises the aliphatic polyester in an amount of from 30 to 70% by weight, based on 100% by weight of the combined amount of the aliphatic polyester, the aliphatic-aromatic polyester, and the polyhydroxyalkanoate. More preferably, the mixture comprises the aliphatic polyester in an amount of from 35 to 65% by weight, based on 100% by weight of the combined amount of the aliphatic polyester, the aliphatic-aromatic polyester, and the polyhydroxyalkanoate. Still more preferably, the mixture comprises the aliphatic polyester in an amount of from 40 to 60% by weight or 42 to 62% by weight, based on 100% by weight of the combined amount of the aliphatic polyester, the aliphatic-aromatic polyester, and the polyhydroxyalkanoate. Even more preferably, the mixture comprises the aliphatic polyester in an amount of from 45 to 55% by weight, based on 100% by weight of the combined amount of the aliphatic polyester, the aliphatic-aromatic polyester, and the polyhydroxyalkanoate. In particular, these ranges can be applied when the aliphatic polyester is a polybutylene succinate. In a preferred embodiment, the mixture comprises 52% by weight of a polybutylene succinate based on 100% by weight of the combined amount of the polybutylene succinate, an aliphatic aromatic polyester and a polyhydroxyalkanoate.

Preferably, the mixture comprises the aliphatic-aromatic polyester in an amount of from 10 to 60% by weight, based on 100% by weight of the combined amount of the aliphatic polyester, the aliphatic-aromatic polyester, and the polyhydroxyalkanoate. More preferably, the mixture comprises the aliphatic-aromatic polyester in an amount of from 20 to 50% by weight, based on 100% by weight of the combined amount of the aliphatic polyester, the aliphatic-aromatic polyester, and the polyhydroxyalkanoate. Still more preferably, the mixture comprises the aliphatic-aromatic polyester in an amount of from 25 to 40% by weight or 26 to 46% by weight, based on 100% by weight of the combined amount of the aliphatic polyester, the aliphatic-aromatic polyester, and the polyhydroxyalkanoate. Even more preferably, the mixture comprises the aliphatic-aromatic polyester in an amount of from 30 to 40% by weight, based on 100% by weight of the combined amount of the aliphatic polyester, the aliphatic-aromatic polyester, and the polyhydroxyalkanoate. In particular, these ranges can be applied when the aliphatic-aromatic polyester is a polybutylene adipate terephthalate (PBAT). In a preferred embodiment, the mixture comprises 36% by weight polybutylene adipate terephthalate (PBAT) based on 100% by weight of the combined amount of an aliphatic polyester, the polybutylene adipate terephthalate (PBAT) and a polyhydroxyalkanoate.

Preferably, the mixture comprises the polyhydroxyalkanoate in an amount of from 1 to 25% by weight, based on 100% by weight of the combined amount of the aliphatic polyester, the aliphatic-aromatic polyester, and the polyhydroxyalkanoate. More preferably, the mixture comprises the polyhydroxyalkanoate in an amount of from 2 to 22% by weight, based on 100% by weight of the combined amount of the aliphatic polyester, the aliphatic-aromatic polyester, and the polyhydroxyalkanoate. Still more preferably, the mixture comprises the polyhydroxyalkanoate in an amount of 3 to 20 by weight, based on 100% by weight of the combined amount of the aliphatic polyester, the aliphatic-aromatic polyester, and the polyhydroxyalkanoate. Still more preferably, the mixture comprises the polyhydroxyalkanoate in an amount of from 3 to 18% by weight, based on 100% by weight of the combined amount of the aliphatic polyester, the aliphatic-aromatic polyester, and the polyhydroxyalkanoate. Even more preferably, the mixture comprises the polyhydroxyalkanoate in an amount of from 5 to 15% by weight, based on 100% by weight of the combined amount of the aliphatic polyester, the aliphatic-aromatic polyester, and the polyhydroxyalkanoate. In particular, these ranges can be applied when the polyhydroxyalkanoate is a polyhydroxybutyrate-co-hydroxyhexanoate, preferably a poly(3-hydroxybutyrate-co-3-hydroxyhexanoate) (PHBH). Preferably, when the polyhydroxyalkanoate is a polyhydroxybutyrate-co-hydroxyhexanoate, preferably a poly(3-hydroxybutyrate-co-3-hydroxyhexanoate) (PHBH), the mixture comprises 20% by weight or less, more preferably 18% by weight or less of the polyhydroxybutyrate-co-hydroxyhexanoate, preferably a poly(3-hydroxybutyrate-co-3-hydroxyhexanoate) (PHBH) based on 100% by weight of the combined amount of an aliphatic polyester, an aliphatic-aromatic polyester and the polyhydroxybutyrate-co-hydroxyhexanoate, preferably the poly(3-hydroxybutyrate-co-3-hydroxyhexanoate) (PHBH).

The ranges for the amounts of the aliphatic polyester, the aliphatic-aromatic polyester and the polyhydroxyalkanoate may be also combined with each other. Accordingly, as illustrative examples, the mixture may comprise the aliphatic polyester in an amount of from 42 to 62% by weight, preferably 45 to 55% by weight, the mixture may comprise the aliphatic-aromatic polyester in an amount of from 26 to 46% by weight, preferably 30 to 40% by weight, and the mixture may comprise the polyhydroxybutyrate in an amount of from 2 to 22% by weight, preferably 3 to 20% by weight, more preferably 3 to 18% by weight, each based on 100% by weight of the combined amount of the aliphatic polyester, the aliphatic-aromatic polyester and the polyhydroxyalkanoate. A person skilled in the art will readily select suitable amounts of one or more of the polymer(s) within the ranges provided herein, so that the total amount of 100% by weight of the combined amount of the aliphatic polyester, the aliphatic-aromatic polyester and the polyhydroxyalkanoate is not exceeded. In particular, these ranges can be applied when the aliphatic polyester is a polybutylene succinate, the aliphatic aromatic polyester is a polybutylene adipate terephthalate, and the polyhydroxyalkanoate is a polyhydroxybutyrate-co-hydroxyhexanoate, preferably a poly(3-hydroxybutyrate-co-3-hydroxyhexanoate) (PHBH). In a very preferred embodiment, the mixture comprises 52% by weight of a polybutylene succinate, 36% by weight of a polybutylene adipate terephthalate and 12% by weight of a polyhydroxybutyrate-co-hydroxyhexanoate, preferably a poly(3-hydroxybutyrate-co-3-hydroxyhexanoate) (PHBH), each based on 100% by weight of the combined amount of the polybutylene succinate, the polybutylene adipate terephthalate and the polyhydroxybutyrate-co-hydroxyhexanoate, preferably the poly(3-hydroxybutyrate-co-3-hydroxyhexanoate) (PHBH).

In the mixture, in particular before injection molding, the aliphatic polyester, the aliphatic-aromatic polyester, and the polyhydroxyalkanoate may be present in the form of particles. Illustrative examples of particles, which can be used in the mixture, may be selected from the group consisting of granules, pellets, extrudates, beads, prills, and any combination thereof. Preferably, the aliphatic polyester, the aliphatic-aromatic polyester, and the polyhydroxyalkanoate is in the form of granules. In a very preferred embodiment, in particular before injection molding, the mixture comprises a polybutylene succinate (PBS), a polybutylene adipate terephthalate (PBAT), and a poly(3-hydroxybutyrate-co-3-hydroxyhexanoate) (PHBH) in the form of granules. Accordingly, the mixture may comprise or may be a granulate comprising a polybutylene succinate (PBS), a polybutylene adipate terephthalate (PBAT), and a poly(3-hydroxybutyrate-co-3-hydroxyhexanoate) (PHBH).

In some embodiments, the polyhydroxyalkanoate may be partially or totally replaced by a polylactide (PLA, or also known as polylactic acid or poly(lactic acid)). Accordingly, in some embodiments, when the polyhydroxyalkanoate is partially replaced by a polylactide, the mixture comprises the aliphatic polyester, the aliphatic-aromatic polyester, the polyhydroxyalkanoate, and a polylactide. In some embodiments, when the polyhydroxyalkanoate is totally replaced by a polylactide, the mixture comprises the aliphatic polyester, the aliphatic-aromatic polyester, and the polylactide. However, in embodiments where the polyhydroxyhexanoate is totally replaced by a polylactide, the mixture does not contain a polyhydroxyalkanoate.

Optionally, the mixture may further comprise at least one additive (one or more additives). For example, the mixture may comprise at least one additive (or one or more additives) that is generally known to be used in an injection molded article. The optional additives may include, but are not limited to, additives such as a flame retardant, a matting agent, a marker for authentication (e.g., a fluorescence marker), an antimicrobial agent, a plasticizer, a colorant, a filler, and any combination thereof.

Preferably, the mixture further comprises a flame retardant. More preferably, the flame retardant is a phosphate. In preferred embodiments, the flame retardant is selected from the group consisting of ammonium dihydrogenphosphate ([NH₄][H₂PO₄]), di-ammonium hydrogenphosphate ([NH₄]₂[HPO₄]), triammonium phosphate ([NH₄]₃[PO₄]) and any combination thereof. More preferably, the flame retardant is selected from the group consisting of ammonium dihydrogenphosphate ([NH₄][H₂PO₄]), di-ammonium hydrogenphosphate ([NH₄]₂[HPO₄]) and any combination thereof. More preferably, the flame retardant is ammonium dihydrogenphosphate ([NH₄][H₂PO₄]) or di-ammonium hydrogenphosphate ([NH₄]₂[HPO₄]). Still more preferably, the flame retardant is di-ammonium hydrogenphosphate ([NH₄]₂[HPO₄]). Alternatively, or in addition, the flame retardant may be a polyphosphate. Preferably, when the flame retardant is a polyphosphate, the flame retardant is ammonium polyphosphate.

The mixture may comprise the flame retardant in an amount of from 0.01 to 5% by weight, based on 100% by weight of the total weight of the mixture. Preferably, the mixture comprises the flame retardant in an amount of from 0.1 to 4% by weight, based on 100% by weight of the total weight of the mixture. More preferably, the mixture comprises the flame retardant in an amount of from 0.2% to 3% by weight, based on 100% by weight of the total weight of the mixture. Still more preferably, the mixture comprises the flame retardant in an amount of from 0.3 to 3% by weight, based on 100% by weight of the total weight of the mixture. Even more preferably, the mixture comprises the flame retardant in an amount of from 0.3 to 2% by weight, based on 100% by weight of the total weight of the mixture. In particular, the foregoing ranges can be applied when the flame retardant is a phosphate or a polyphosphate, preferably, when the flame retardant is di-ammonium hydrogenphosphate ([NH₄]₂[HPO₄]).

Optionally, the mixture may (also) include a plasticizer. Any plasticizer known to a person skilled in the art, which is suitable for being used in an injection molded article, can be used. As an illustrative example, the plasticizer may be polycaprolactone, which is biodegradable. In some embodiments, the mixture may comprise polycaprolactone in an amount of 1% by weight or less based on 100% by weight of the total weight of the mixture.

A person skilled in the art will readily select suitable amount(s) of the additive(s) to be comprised in the mixture. As an illustrative example, the mixture may comprise a total amount of additive(s) of 15% by weight or less, based on 100% by weight of the total weight of the mixture. The mixture may comprise a total amount of additive(s) of 10% by weight or less, based on 100% by weight of the total weight of the mixture. Preferably, the mixture comprises a total amount of additives of 7% by weight or less, based on 100% by weight of the total weight of the mixture. More preferably, the mixture comprises a total amount of additives of 5% by weight or less, based on 100% by weight of the total weight of the mixture. Still more preferably, the mixture comprises a total amount of additives of 4% by weight or less, based on 100% by weight of the total weight of the mixture. Even more preferably, the mixture comprises a total amount of additives of 3 to 4% by weight, based on 100% by weight of the total weight of the mixture. It is preferred that the mixture comprises a total amount of additives of 7% by weight or less, more preferably 3 to 4% by weight, each based on 100% by weight of the total weight of the mixture, in order to achieve a useful strength and ductility (or flexibility) of the injection molded article.

In some embodiments, the injection molded article may be prepared as a button, a push button, a zipper, a wall support, a cap, a container, preferably a container for food or liquid, a preform, cutlery, a toothbrush, a curtain rod, a closure, a closure pin, a buckle, a hook, a roll, a glider, a packaging, a capsule, an article used in a laboratory, an article used in medical science, a personal protective equipment or a part thereof, an article used in the production of a textile, a part used in technology purposes, a part of an electric switch, or an article used in a garden.

The present invention also relates to an injection molded article obtainable or being obtained by a method according to the invention.

The present invention also relates to a use of a mixture comprising an aliphatic polyester, an aliphatic-aromatic polyester, and a polyhydroxyalkanoate for the preparation of an injection molded article, wherein the injection molded article is as defined herein.

The present invention also relates to a use of a mixture comprising an aliphatic polyester, an aliphatic-aromatic polyester, and a polyhydroxyalkanoate for injection molding.

It is noted that as used herein, the singular forms "a", "an", and "the", include plural references unless the context clearly indicates otherwise. Thus, for example, reference to "a reagent" includes one or more of such different reagents and reference to "the method" includes reference to equivalent steps and methods known to those of ordinary skill in the art that could be modified or substituted for the methods described herein.

Unless otherwise indicated, the term "at least" preceding a series of elements is to be understood to refer to every element in the series. Those skilled in the art will recognize, or be able to ascertain using no more than routine experimentation, many equivalents to the specific embodiments of the invention described herein. Such equivalents are intended to be encompassed by the present invention.

The term "and/or" wherever used herein includes the meaning of "and", "or" and "all or any other combination of the elements connected by said term".

The term "less than" or in turn "greater than" does not include the concrete number. For example, "less than 20" means less than the number indicated. Similarly, "greater than" means greater than the indicated number, e.g., greater than 80 % means greater than the indicated number of 80 %.

Throughout this specification and the claims which follow, unless the context requires otherwise, the word "comprise", and variations such as "comprises" and "comprising", will be understood to imply the inclusion of a stated integer or step or group of integers or steps but not the exclusion of any other integer or step or group of integer or step. When used herein the term "comprising" can be substituted with the term "containing" or "including" or sometimes when used herein with the term "having".

When used herein, "consisting of" excludes any element, step, or ingredient not specified in the claim element. When used herein, "consisting essentially of" does not exclude materials or steps that do not materially affect the basic and novel characteristics of the claim. In each instance herein any of the terms "comprising", "consisting essentially of" and "consisting of" may be replaced with either of the other two terms.

The term "including" means "including but not limited to". "Including" and "including but not limited to" are used interchangeably.

When used herein, the term "about" is understood to mean that there can be variation in the respective value or range (such as pH, concentration, percentage, molarity, time etc.) that can be up to 5 %, up to 10 % of the given value. For example, if a formulation comprises about 5 mg/ml of a compound, this is understood to mean that a formulation can have between 4.5 and 5.5 mg/ml.

It should be understood that this invention is not limited to the particular methodology, protocols, material, reagents, and substances, etc., described herein and as such can vary. The terminology used herein is for the purpose of describing particular embodiments only and is not intended to limit the scope of the present invention, which is defined solely by the claims.

A better understanding of the present invention and of its advantages will be provided by the following examples, offered for illustrative purposes only. The examples are not intended to limit the scope of the present invention in any way.

### EXAMPLES

### Example 1: Preparation of Injection Molded Articles According to Embodiments of the Invention

The following components (polymer I, polymer II, polymer III and a masterbatch of additives) were used for preparation of injection-molded articles in accordance with embodiments of the invention:
Polymer I: Polybutylene succinate (PBS, Mitsubishi Chemicals Bio PBS FZ71, bio-based)
Polymer II: Polybutylene adipate terephthalate (PBAT, BASF ECOFLEX PBAT)
Polymer III: Poly(3-hydroxybutyrate-co-3-hydroxyhexanoate) (PHBH, KANEKA AONILEX X151A, bio-based)
Masterbatch: The masterbatch comprises the additives in the amounts as indicated in the following Table 1

**Table 1**

| | | |
|---|---|---|
| 10% by weight | Zinc sulfide (Kremer Zinksulfid 46350, Kremer Pigmente GmbH & Co. KG, Aichstetten, Germany) | Matting of the injection molded article, increase of melting point |
| 22% by weight | di-ammonium hydrogen phosphate ((NH₄)₂HPO₄) (EMSURE^{®}, Sigma Aldrich product number 1.01207, Millipore) | Flame retardant |
| 50 PPB | Fluorescent particles (oligomers from Polysecure GmbH, Freiburg im Breisgau, Germany) | Marker for authentication |
| 13% by weight | SMARTZINC 213 PET Hot Melt (zinc encapsulated with polyethylene therephthalate, Smartpolymer GmbH, Rudolstadt, Germany) | Antimicrobial agent |
| 55% by weight | Filler (wood plastic composite (WPC)) Chromated copper arsenate (CCA)-free High-purity lignin GRAANUL Biotech (Sweet Woods), Tallinn, Estonia | Filler |
| **100% by weight (sum)** | | |

Polymer I (polybutylene succinate (PBS)), polymer II (polybutylene adipate terephthalate (PBAT)) and polymer III (poly(3-hydroxybutyrate-co-3-hydroxyhexanoate) (PHBH)) were used as granules. Polymers I, II and III, and the masterbatch (additives) were dried at 60°C for 24 hours in a vacuum drying cabinet before use. The moisture content was about 0.1% by weight.

Polymer I (15,600 g, polybutylene succinate (PBS)), polymer II (10,800 g, polybutylene adipate terephthalate (PBAT)) and polymer III (3,600 g, poly(3-hydroxybutyrate-co-3-hydroxyhexanoate) (PHBH)) were mixed with 1.650 kg of the masterbatch (additives) to prepare a mixture for injection molding. The mixture was subjected to injection molding using an injection molding machine (Arburg A270S, Arburg GmbH + Co KG, Loßburg, Germany) to prepare injection molded articles according to embodiments of the invention. The mass temperature (temperature of the melt before injection) was 182°C. The temperature of the mold (temperature of the wall of the mold) was 44°C. After removal of the mold, the injection molded article was dried in air at 78°C. The maximum residual moisture of the injection molded article was 0.06%.

The molds had cavities having a shape of a button, a push button, a zipper, a curtain rod, a closure pin, a pinch buckle, a bar buckle, a hook, a curtain glider and a coffee capsule. Accordingly, a button, a push button, a zipper, a curtain rod, a closure pin, a pinch buckle, a bar buckle, a hook, a curtain glider and a coffee capsule were produced as injection molded articles in accordance with embodiments of the invention.

**Figure** 1 shows a photograph of granules 1 of a mixture that can be used for preparing an injection molded article in accordance with the invention, and injection molded articles 3, 5, 7 and 9 in accordance with embodiments of the invention as prepared, e.g., in present Example 1. In this regard, **Figure** 1 shows coffee capsules 3, a push button 5 comprising two parts, curtain gliders 7, and zippers 9. Coffee capsules were prepared having a minimum wall thickness of 0.55 mm. Accordingly, a mixture comprising an aliphatic polyester, an aliphatic-aromatic polyester and a polyhydroxyalkanoate, as described herein, has turned out to be well suited to produce thin-walled articles via injection molding.

Further, the mixture was also used for preparing test specimens by injection molding. The test specimens were subjected to tensile testing in accordance with standard ISO 527-1. The elongation at break was 6.7%. The tensile strength was 25 MPa. The results show that an injection molded article comprising an aliphatic polyester, an aliphatic-aromatic polyester and a polyhydroxyalkanoate, as described herein, exhibits a good strength and ductility.

## Claims

1. An injection molded article being made from a mixture comprising an aliphatic polyester, an aliphatic-aromatic polyester, and a polyhydroxyalkanoate, wherein the aliphatic polyester is a polybutylene succinate (PBS), the aliphatic-aromatic polyester is a polybutylene adipate terephthalate (PBAT), and the polyhydroxyalkanoate is a poly(3-hydroxybutyrate-co-3-hydroxyhexanoate) (PHBH).

2. The injection molded article of claim 1, wherein the injection molded article comprises the aliphatic polyester in an amount of from 30 to 70% by weight based on 100% by weight of the combined amount of the aliphatic polyester, the aliphatic-aromatic polyester, and the polyhydroxyalkanoate;
and/or wherein the injection molded article comprises the aliphatic-aromatic polyester in an amount of from 10 to 60% by weight based on 100% by weight of the combined amount of the aliphatic polyester, the aliphatic-aromatic polyester, and the polyhydroxyalkanoate;
and/or wherein the injection molded article comprises the polyhydroxyalkanoate in an amount of from 1 to 25% by weight based on 100% by weight of the combined amount of the aliphatic polyester, the aliphatic-aromatic polyester, and the polyhydroxyalkanoate;
optionally wherein the injection molded article comprises the aliphatic polyester in an amount of from 42 to 62% by weight, the aliphatic-aromatic polyester in an amount of from 26 to 46% by weight, and the polyhydroxyalkanoate in an amount of from 2 to 22% by weight based on 100% by weight of the combined amount of the aliphatic polyester, the aliphatic-aromatic polyester, and the polyhydroxyalkanoate.

3. The injection molded article of any one of the preceding claims, wherein the polyhydroxyalkanoate is partially or totally replaced by a polylactide.

4. The injection-molded article of any one of the preceding claims, wherein the injection molded article further comprises at least one additive,
wherein the at least one additive is preferably selected from the group consisting of a flame retardant, a matting agent, a fluorescence marker, an antimicrobial agent, a plasticizer, a colorant, a filler, and any combination thereof;
wherein the flame retardant is preferably a phosphate selected from the group consisting of ammonium dihydrogenphosphate ([NH₄][H₂PO₄]), di-ammonium hydrogenphosphate ([NH₄]₂[HPO₄]), triammonium phosphate ([NH₄]₃[PO₄]), ammonium polyphosphate, and any combination thereof and wherein the phosphate is preferably di-ammonium hydrogenphosphate ([NH₄]₂[HPO₄]), and wherein optionally the injection molded article comprises the flame retardant in an amount of from 0.01 to 5% by weight, preferably 0.1 to 4% by weight, more preferably 0.2 to 3% by weight, still more preferably 0.3 to 2% by weight, based on 100% by weight of the total weight of the injection molded article;
wherein the matting agent is optionally zinc sulfide;
wherein the antimicrobial agent is optionally zinc encapsulated with polyethylene terephthalate;
wherein the filler optionally is or comprises lignin; and
optionally wherein the injection molded article comprises a total amount of additive(s) of 15% by weight or less, preferably 10% by weight or less, more preferably 7% by weight or less, still more preferably 5% by weight or less, even more preferably 4% by weight or less, even more preferably 3 to 4% by weight, based on 100% by weight of the total weight of the injection molded article.

5. The injection molded article of any one of the preceding claims, wherein the injection molded article is biodegradable in accordance with EN 13432.

6. The injection molded article of any one of the preceding claims, wherein the injection molded article is selected from the group consisting of a button, a push button, a zipper, a wall support, a cap, a container, preferably a container for food or liquid, a preform, a cutlery, a toothbrush, a rod such as e.g. a curtain rod, a closure, a closure pin, a buckle such as e.g. a pinch buckle or a bar buckle, a hook, a roll, a glider such as e.g. a curtain glider, a packaging, and a capsule such as e.g. a coffee capsule a tea capsule, an article used in a laboratory, an article used in medical science, a personal protective equipment or a part thereof, an article used in the production of a textile, a part used in technology purposes, a part of an electric switch, or an article used in a garden.

7. A method of preparing an injection molded article according to any one of claims 1 to 6, comprising injection molding of a mixture comprising an aliphatic polyester, an aliphatic-aromatic polyester, and a polyhydroxyalkanoate, wherein the aliphatic polyester is a polybutylene succinate (PBS), the aliphatic-aromatic polyester is a polybutylene adipate terephthalate (PBAT), and the polyhydroxyalkanoate is a poly(3-hydroxybutyrate-co-3-hydroxyhexanoate) (PHBH).

8. The method of claim 7, wherein the injection molding comprises melt-kneading of the mixture and injecting into a mold.

9. The method of claim 7 or 8, wherein the mixture comprises the aliphatic polyester in an amount of from 30 to 70% by weight based on 100% by weight of the combined amount of the aliphatic polyester, the aliphatic-aromatic polyester, and the polyhydroxyalkanoate;
and/or wherein the mixture comprises the aliphatic-aromatic polyester in an amount of from 10 to 60% by weight based on 100% by weight of the combined amount of the aliphatic polyester, the aliphatic-aromatic polyester, and the polyhydroxyalkanoate;
and/or wherein the mixture comprises the polyhydroxyalkanoate in an amount of from 1 to 25% by weight based on 100% by weight of the combined amount of the aliphatic polyester, the aliphatic-aromatic polyester, and the polyhydroxyalkanoate;
or optionally wherein the mixture comprises the aliphatic polyester in an amount of from 42 to 62% by weight, the aliphatic-aromatic polyester in an amount of from 26 to 46% by weight, and the polyhydroxyalkanoate in an amount of from 2 to 22% by weight based on 100% by weight of the combined amount of the aliphatic polyester, the aliphatic-aromatic polyester, and the polyhydroxyalkanoate.

10. The method of any one of claims 7 to 9, wherein the polyhydroxyalkanoate is partially or totally replaced by a polylactide.

11. The method of any one of claims 7 to 10, wherein the mixture further comprises at least one additive;
wherein the at least one additive is optionally selected from the group consisting of a flame retardant, a matting agent, a fluorescence marker, an antimicrobial agent, a plasticizer, a colorant, a filler, and any combination thereof;
wherein the additive is preferably a flame retardant and optionally the mixture comprises the flame retardant in an amount of from 0.01 to 5% by weight, preferably 0.1 to 4% by weight, more preferably 0.2 to 3% by weight, still more preferably 0.3 to 2% by weight, based on 100% by weight of the total weight of the mixture;
wherein optionally the total amount of additive(s) is 15% by weight or less, preferably 10% by weight or less, more preferably 7% by weight or less, still more preferably 5% by weight or less, even more preferably 4% by weight or less, even more preferably 3 to 4% by weight, based on 100% by weight of the total weight of the mixture.

12. The method of any one of claims 7 to 11, wherein the injection molded article is prepared as a button, a push button, a zipper, a wall support, a cap, a container, preferably a container for food or liquid, a preform, a cutlery, a toothbrush, a rod such as e.g. a curtain rod, a closure, a closure pin, a buckle such as e.g. a pinch buckle or a bar buckle, a hook, a roll, a glider such as e.g. a curtain glider, a packaging, a capsule such as e.g. a coffee capsule or a tea capsule, an article used in a laboratory, an article used in medical science, a personal protective equipment or a part thereof, an article used in the production of a textile, a part used in technology purposes, a part of an electric switch, or an article used in a garden.

13. An injection molded article obtainable or being obtained by a method according to any one of claims 7 to 12.

14. Use of a mixture comprising an aliphatic polyester, an aliphatic-aromatic polyester, and a polyhydroxyalkanoate for the preparation of an injection-molded article, wherein the injection-molded article is as defined in any one of claims 1 to 6 and 13.

15. Use of a mixture comprising an aliphatic polyester, an aliphatic-aromatic polyester, and a polyhydroxyalkanoate for injection molding, wherein the aliphatic polyester is a polybutylene succinate (PBS), the aliphatic-aromatic polyester is a polybutylene adipate terephthalate (PBAT), and the polyhydroxyalkanoate is a poly(3-hydroxybutyrate-co-3-hydroxyhexanoate) (PHBH).

## Patentansprüche

1. Spritzgussgegenstand, hergestellt aus einem Gemisch, das einen aliphatischen Polyester, einen aliphatisch-aromatischen Polyester und ein Polyhydroxyalkanoat umfasst, wobei der aliphatische Polyester ein Polybutylensuccinat (PBS), der aliphatisch-aromatische Polyester ein Polybutylenadipatterephthalat (PBAT) und das Polyhydroxyalkanoat ein Poly(3-hydroxybutyrat-co-3-hydroxyhexanoat) (PHBH) ist.

2. Spritzgussgegenstand nach Anspruch 1, wobei der Spritzgussgegenstand den aliphatischen Polyester in einer Menge von 30 bis 70 Gew.-%, bezogen auf 100 Gew.- % der kombinierten Menge des aliphatischen Polyesters, des aliphatisch-aromatischen Polyesters und des Polyhydroxyalkanoats, umfasst;
und/oder wobei der Spritzgussgegenstand den aliphatisch-aromatischen Polyester in einer Menge von 10 bis 60 Gew.-%, bezogen auf 100 Gew.-% der kombinierten Menge des aliphatischen Polyesters, des aliphatisch-aromatischen Polyesters und des Polyhydroxyalkanoats, umfasst;
und/oder wobei der Spritzgussgegenstand das Polyhydroxyalkanoat in einer Menge von 1 bis 25 Gew.-%, bezogen auf 100 Gew.-% der kombinierten Menge des aliphatischen Polyesters, des aliphatisch-aromatischen Polyesters und des Polyhydroxyalkanoats, umfasst;
wobei optional der Spritzgussgegenstand den aliphatischen Polyester in einer Menge von 42 bis 62 Gew.-%, den aliphatisch-aromatischen Polyester in einer Menge von 26 bis 46 Gew.-% und das Polyhydroxyalkanoat in einer Menge von 2 bis 22 Gew.-%, bezogen auf 100 Gew.-% der kombinierten Menge des aliphatischen Polyesters, umfasst, das aliphatisch-aromatische Polyester und das Polyhydroxyalkanoat umfasst.

3. Spritzgussgegenstand nach einem der vorhergehenden Ansprüche, wobei das Polyhydroxyalkanoat teilweise oder vollständig durch ein Polylactid ersetzt wird.

4. Spritzgussgegenstand nach einem der vorhergehenden Ansprüche, wobei der Spritzgussgegenstand ferner mindestens ein Additiv umfasst,
wobei das mindestens eine Additiv vorzugsweise aus der Gruppe ausgewählt ist bestehend aus einem Flammschutzmittel, einem Mattierungsmittel, einem Fluoreszenzmarker, einem antimikrobiellen Mittel, einem Weichmacher, einem Farbstoff, einem Füllstoff und einer beliebigen Kombination davon;
wobei das Flammschutzmittel vorzugsweise ein Phosphat ist, ausgewählt aus der Gruppe bestehend aus Ammoniumdihydrogenphosphat ([NH₄][H₂PO₄]), Diammoniumhydrogenphosphat ([NH₄]₂[HPO₄]), Triammoniumphosphat ([NH₄]₃[PO₄]), Ammoniumpolyphosphat und einer beliebigen Kombination davon, und wobei das Phosphat vorzugsweise Diammoniumhydrogenphosphat ([NH₄]₂[HPO₄]) ist, und wobei gegebenenfalls der Spritzgussgegenstand das Flammschutzmittel in einer Menge von 0,01 bis 5 Gew.-%, bevorzugt 0,1 bis 4 Gew.-%, mehr bevorzugt 0,2 bis 3 Gew.-%, noch mehr bevorzugt 0,3 bis 2 Gew.-%, bezogen auf 100 Gew.-% des Gesamtgewichts des Spritzgussgegenstands umfasst;
wobei das Mattierungsmittel gegebenenfalls Zinksulfid ist;
wobei das antimikrobielle Mittel gegebenenfalls mit Polyethylenterephthalat verkapseltes Zink ist;
wobei der Füllstoff gegebenenfalls Lignin ist oder umfasst; und
wobei gegebenenfalls der Spritzgussgegenstand eine Gesamtmenge an Additiven von 15 Gew.-% oder weniger, bevorzugt 10 Gew.-% oder weniger, mehr bevorzugt 7 Gew.- % oder weniger, noch mehr bevorzugt 5 Gew.-% oder weniger, noch mehr bevorzugt 4 Gew.-% oder weniger, noch mehr bevorzugt 3 bis 4 Gew.-%, bezogen auf 100 Gew.- % des Gesamtgewichts des Spritzgussgegenstands umfasst.

5. Spritzgussgegenstand nach einem der vorhergehenden Ansprüche, wobei der Spritzgussgegenstand gemäß EN 13432 biologisch abbaubar ist.

6. Spritzgussgegenstand nach einem der vorhergehenden Ansprüche, wobei der Spritzgussgegenstand ausgewählt ist aus der Gruppe, bestehend aus einem Knopf, einem Druckknopf, einem Reißverschluss, einer Wandhalterung, einer Kappe, einem Behälter, vorzugsweise einem Behälter für Lebensmittel oder Flüssigkeiten, einer Vorform, einem Besteck, einer Zahnbürste, einer Stange, wie z. B. einer Gardinenstange, einem Verschluss, einem Verschlussstift, einer Schnalle, wie z. B. einer Klemmschnalle oder einer Stangenschnalle, einem Haken, einer Rolle, einem Gleiter, wie z. B. einem Gardinengleiter, einer Verpackung und einer Kapsel, wie z. B. einer Kaffeekapsel, einer Teekapsel, einem in einem Labor verwendeten Gegenstand, einem in der Medizin verwendeten Gegenstand, einer persönliche Schutzausrüstung oder einem Teil davon, einem Gegenstand, der bei der Herstellung eines Textils verwendet wird, einem Teil, das für technologische Zwecke verwendet wird, einem Teil eines elektrischen Schalters oder ein Gegenstand, der in einem Garten verwendet wird.

7. Verfahren zum Herstellen eines Spritzgussgegenstands nach einem der Ansprüche 1 bis 6, umfassend das Spritzgießen eines Gemisches umfassend einen aliphatischen Polyester, einen aliphatisch-aromatischen Polyester und ein Polyhydroxyalkanoat, wobei der aliphatische Polyester ein Polybutylensuccinat (PBS), der aliphatisch-aromatische Polyester ein Polybutylenadipatterephthalat (PBAT) und das Polyhydroxyalkanoat ein Poly(3-hydroxybutyrat-co-3-hydroxyhexanoat) (PHBH) ist.

8. Verfahren nach Anspruch 7, wobei das Spritzgießen das Schmelzkneten des Gemisches und das Einspritzen in eine Form umfasst.

9. Verfahren nach Anspruch 7 oder 8, wobei das Gemisch den aliphatischen Polyester in einer Menge von 30 bis 70 Gew.-%, bezogen auf 100 Gew.-% der kombinierten Menge des aliphatischen Polyesters, des aliphatisch-aromatischen Polyesters und des Polyhydroxyalkanoats, umfasst;
und/oder wobei das Gemisch den aliphatisch-aromatischen Polyester in einer Menge von 10 bis 60 Gew.-%, bezogen auf 100 Gew.-% der kombinierten Menge des aliphatischen Polyesters, des aliphatisch-aromatischen Polyesters und des Polyhydroxyalkanoats, umfasst;
und/oder wobei das Gemisch das Polyhydroxyalkanoat in einer Menge von 1 bis 25 Gew.-%, bezogen auf 100 Gew.-% der kombinierten Menge des aliphatischen Polyesters, des aliphatisch-aromatischen Polyesters und des Polyhydroxyalkanoats, umfasst;
oder wobei optional das Gemisch den aliphatischen Polyester in einer Menge von 42 bis 62 Gew.-%, den aliphatisch-aromatischen Polyester in einer Menge von 26 bis 46 Gew.-% und das Polyhydroxyalkanoat in einer Menge von 2 bis 22 Gew.-%, bezogen auf 100 Gew.-% der kombinierten Menge des aliphatischen Polyesters, des aliphatisch-aromatische Polyesters und des Polyhydroxyalkanoats umfasst.

10. Verfahren nach einem der Ansprüche 7 bis 9, wobei das Polyhydroxyalkanoat teilweise oder vollständig durch ein Polylactid ersetzt wird.

11. Verfahren nach einem der Ansprüche 7 bis 10, wobei das Gemisch weiterhin mindestens ein Additiv umfasst;
wobei das mindestens eine Additiv gegebenenfalls aus der Gruppe ausgewählt ist, die aus einem Flammschutzmittel, einem Mattierungsmittel, einem Fluoreszenzmarker, einem antimikrobiellen Mittel, einem Weichmacher, einem Farbstoff, einem Füllstoff und einer beliebigen Kombination davon besteht;
wobei das Additiv vorzugsweise ein Flammschutzmittel ist und das Gemisch gegebenenfalls das Flammschutzmittel in einer Menge von 0,01 bis 5 Gew.-%, bevorzugt 0,1 bis 4 Gew.-%, mehr bevorzugt 0,2 bis 3 Gew.-%, noch mehr bevorzugt 0,3 bis 2 Gew.-%, bezogen auf 100 Gew.-% des Gesamtgewichts des Gemisches umfasst;
wobei gegebenenfalls die Gesamtmenge an Additiv(en) 15 Gew.-% oder weniger, bevorzugt 10 Gew.-% oder weniger, mehr bevorzugt 7 Gew.-% oder weniger, noch mehr bevorzugt 5 Gew.-% oder weniger, noch mehr bevorzugt 4 Gew.-% oder weniger, noch bevorzugter 3 bis 4 Gew.-%, bezogen auf 100 Gew.-% des Gesamtgewichts des Gemisches, beträgt.

12. Verfahren nach einem der Ansprüche 7 bis 11, wobei der Spritzgussgegenstand hergestellt wird als ein Knopf, ein Druckknopf, ein Reißverschluss, eine Wandhalterung, eine Kappe, ein Behälter, vorzugsweise ein Behälter für Lebensmittel oder Flüssigkeiten, eine Vorform, ein Besteck, eine Zahnbürste, eine Stange, wie z. B. eine Gardinenstange, ein Verschluss, ein Verschlussstift, eine Schnalle, wie z.B. eine Klemmschnalle oder eine Stangenschnalle, ein Haken, eine Rolle, ein Gleiter, wie z.B. ein Gardinengleiter, eine Verpackung, eine Kapsel wie z.B. eine Kaffeekapsel oder eine Teekapsel, ein Gegenstand, der in einem Labor verwendet wird, ein Gegenstand, der in der medizinischen Wissenschaft verwendet wird, eine persönliche Schutzausrüstung oder ein Teil davon, ein Gegenstand, der bei der Herstellung eines Textils verwendet wird, ein Teil, der für technologische Zwecke verwendet wird, ein Teil eines elektrischen Schalters oder ein Gegenstand, der in einem Garten verwendet wird.

13. Spritzgussgegenstand, der nach einem der Ansprüche 7 bis 12 durch ein Verfahren nach einem der Ansprüche 7 bis 12 hergestellt werden kann oder hergestellt wird.

14. Verwendung eines Gemisches, das einen aliphatischen Polyester, einen aliphatisch-aromatischen Polyester und ein Polyhydroxyalkanoat umfasst, zur Herstellung eines spritzgegossenen Artikels, wobei der Spritzgussgegenstand wie in einem der Ansprüche 1 bis 6 und 13 definiert ist.

15. Verwendung eines Gemisches, das einen aliphatischen Polyester, einen aliphatisch-aromatischen Polyester und ein Polyhydroxyalkanoat zum Spritzgießen umfasst, wobei der aliphatische Polyester ein Polybutylensuccinat (PBS), der aliphatisch-aromatische Polyester ein Polybutylenadipatterephthalat (PBAT) und das Polyhydroxyalkanoat ein Poly(3-hydroxybutyrat-co-3-hydroxyhexanoat) (PHBH) ist.

## Revendications

1. Article moulé par injection fabriqué à partir d'un mélange comprenant un polyester aliphatique, un polyester aliphatique-aromatique et un polyhydroxyalcanoate, dans lequel le polyester aliphatique est un succinate de polybutylène (PBS), le polyester aliphatique-aromatique est un adipate de polybutylène téréphtalate (PBAT) et le polyhydroxyalcanoate est un poly(3-hydroxybutyrate-co-3-hydroxyhexanoate) (PHBH).

2. Article moulé par injection selon la revendication 1, dans lequel l'article moulé par injection comprend le polyester aliphatique en une quantité de 30 à 70 % en poids basée sur 100 % en poids de la quantité combinée de polyester aliphatique, de polyester aliphatique-aromatique et de polyhydroxyalcanoate ;
et/ou dans lequel l'article moulé par injection comprend du polyester aliphatique-aromatique en quantité de 10 à 60 % en poids sur la base de 100 % en poids de la quantité combinée de polyester aliphatique, de polyester aliphatique-aromatique et de polyhydroxyalcanoate ;
et/ou dans lequel l'article moulé par injection comprend le polyhydroxyalcanoate en une quantité de 1 à 25 % en poids basée sur 100 % en poids de la quantité combinée de polyester aliphatique, de polyester aliphatique-aromatique et de polyhydroxyalcanoate ;
éventuellement, l'article moulé par injection comprend le polyester aliphatique dans une quantité de 42 à 62 % en poids, le polyester aliphatique-aromatique dans une quantité de 26 à 46 % en poids, et le polyhydroxyalcanoate dans une quantité de 2 à 22 % en poids sur la base de 100 % en poids de la quantité combinée de polyester aliphatique, le polyester aliphatique-aromatique et le polyhydroxyalcanoate.

3. Article moulé par injection selon l'une quelconque des revendications précédentes, dans lequel le polyhydroxyalcanoate est partiellement ou totalement remplacé par un polylactide.

4. Article moulé par injection selon l'une quelconque des revendications précédentes, dans lequel l'article moulé par injection comprend en outre au moins un additif,
dans lequel le ou les additifs sont choisis de préférence dans le groupe constitué d'un retardateur de flamme, d'un agent matifiant, d'un marqueur de fluorescence, d'un agent antimicrobien, d'un plastifiant, d'un colorant, d'une charge et de toute combinaison de ceux-ci ;
dans lequel le retardateur de flamme est de préférence un phosphate choisi dans le groupe constitué par le dihydrogénphosphate d'ammonium ([NH₄][H₂PO₄]), l'hydrogénophosphate de diammonium ([NH₄]₂[HPO₄]), le phosphate de triammonium ([NH₄]₃[PO₄]), le polyphosphate d'ammonium, et toute combinaison de ceux-ci, et dans lequel le phosphate est de préférence de l'hydrogénophosphate de diammonium ([NH₄]₂[HPO₄]), et dans lequel, éventuellement, l'article moulé par injection comprend le retardateur de flamme dans une quantité de 0,01 à 5 % en poids, de préférence de 0,1 à 4 % en poids, de préférence de 0,2 à 3 % en poids, de préférence de 0,3 à 2 % en poids, sur la base de 100 % en poids du poids total de l'article moulé par injection ; dans lequel l'agent de matage est éventuellement du sulfure de zinc ;
dans lequel l'agent antimicrobien est éventuellement encapsulé dans du zinc avec du polyéthylène téréphtalate ;
dans lequel la charge est ou comprend éventuellement de la lignine ; et
de manière facultative, l'article moulé par injection comprend une quantité totale d'additif ou moins de 15 % en poids, de préférence 10 % en poids ou moins, plus préférentiellement 7 % en poids ou moins, encore plus préférentiellement 5 % en poids ou moins, encore plus préférentiellement 4 % en poids ou moins, encore plus préférentiellement 3 à 4 % en poids, sur la base de 100 % en poids du poids total de l'article moulé par injection.

5. Article moulé par injection selon l'une quelconque des revendications précédentes, dans lequel l'article moulé par injection est biodégradable conformément à la norme EN 13432.

6. Article moulé par injection selon l'une quelconque des revendications précédentes, dans lequel l'article moulé par injection est choisi dans le groupe constitué d'un bouton, d'un bouton-poussoir, d'une fermeture éclair, d'un support mural, d'un capuchon, d'un récipient, de préférence un récipient pour aliments ou liquides, d'une préforme, d'un couvert, d'une brosse à dents, d'une tringle telle que par exemple une tringle à rideau, un bouchon, une goupille de serrage, une boucle telle qu'une boucle à pince ou une boucle à barre, un crochet, un rouleau, un planeur tel qu'un planeur à rideau, un emballage et une capsule telle qu'une capsule de café, une capsule de thé, un article utilisé dans un laboratoire, un article utilisé dans les sciences médicales, un équipement de protection individuelle ou une partie de celui-ci, un article utilisé dans la production d'un textile, une pièce utilisée à des fins technologiques, une pièce d'un interrupteur électrique ou un article utilisé dans un jardin.

7. Procédé de préparation d'un article moulé par injection selon l'une quelconque des revendications 1 à 6, comprenant le moulage par injection d'un mélange comprenant un polyester aliphatique, un polyester aliphatique-aromatique et un polyhydroxyalcanoate, dans lequel le polyester aliphatique est un succinate de polybutylène (PBS), le polyester aliphatique-aromatique est un adipate de polybutylène téréphtalate (PBAT) et le polyhydroxyalcanoate est un poly(3-hydroxybutyrate-co-3-hydroxyhexanoate) (PHBH).

8. Procédé selon la revendication 7, dans lequel le moulage par injection comprend le pétrissage à l'état fondu du mélange et l'injection dans un moule.

9. Procédé selon la revendication 7 ou 8, dans lequel le mélange comprend le polyester aliphatique en une quantité de 30 à 70 % en poids basée sur 100 % en poids de la quantité combinée de polyester aliphatique, de polyester aliphatique-aromatique et de polyhydroxyalcanoate ;
et/ou dans lequel le mélange comprend du polyester aliphatique-aromatique en quantité de 10 à 60 % en poids, sur la base de 100 % en poids de la quantité combinée de polyester aliphatique, de polyester aliphatique-aromatique et de polyhydroxyalcanoate ;
et/ou dans lequel le mélange comprend le polyhydroxyalcanoate en une quantité de 1 à 25 % en poids basée sur 100 % en poids de la quantité combinée de polyester aliphatique, de polyester aliphatique-aromatique et de polyhydroxyalcanoate ;
ou, éventuellement, dans lequel le mélange comprend le polyester aliphatique en poids de 42 à 62 %, le polyester aliphatique-aromatique en poids de 26 à 46 % et le polyhydroxyalcanoate en poids de 2 à 22 % en poids sur la base de 100 % en poids de la quantité combinée de polyester aliphatique, le polyester aliphatique-aromatique et le polyhydroxyalcanoate.

10. Procédé selon l'une quelconque des revendications 7 à 9, dans lequel le polyhydroxyalcanoate est partiellement ou totalement remplacé par un polylactide.

11. Procédé selon l'une quelconque des revendications 7 à 10, dans lequel le mélange comprend en outre au moins un additif ;
dans lequel au moins un additif est choisi de manière facultative dans le groupe constitué d'un retardateur de flamme, d'un agent matifiant, d'un marqueur de fluorescence, d'un agent antimicrobien, d'un plastifiant, d'un colorant, d'une charge et de toute combinaison de ceux-ci ;
dans lequel l'additif est de préférence un retardateur de flamme et, en option, le mélange comprend le retardateur de flamme dans une quantité de 0,01 à 5 % en poids, de préférence 0,1 à 4 % en poids, de préférence de 0,2 à 3 % en poids, de préférence encore de 0,3 à 2 % en poids, sur la base de 100 % en poids du poids total du mélange ; dans lequel, éventuellement, la quantité totale d'additif ou d'additif est inférieure ou égale à 15 % en poids, de préférence inférieure ou égale à 10 % en poids, de préférence inférieure ou égale à 7 % en poids, de préférence à 5 % ou moins, de préférence encore plus préférablement de 4 % en poids ou moins, de préférence de 3 à 4 % en poids, sur la base de 100 % en poids du poids total du mélange.

12. Procédé selon l'une quelconque des revendications 7 à 11, dans lequel l'article moulé par injection est préparé sous la forme d'un bouton, d'un bouton-poussoir, d'une fermeture éclair, d'un support mural, d'un capuchon, d'un récipient, de préférence un récipient pour aliments ou liquides, d'une préforme, d'un couvert, d'une brosse à dents, d'une tringle telle que par exemple une tringle à rideau, une fermeture, une goupille de fermeture, une boucle telle qu'une boucle à pince ou une boucle à barre, un crochet, un rouleau, un planeur tel qu'un planeur à rideau, un emballage, une capsule telle qu'une capsule de café ou une capsule de thé, un article utilisé en laboratoire, un article utilisé dans les sciences médicales, un équipement de protection individuelle ou une partie de celui-ci, un article utilisé dans la production d'un textile, une pièce utilisée à des fins technologiques, une pièce d'un interrupteur électrique ou un article utilisé dans un jardin.

13. Article moulé par injection pouvant être obtenu ou étant obtenu par un procédé selon l'une quelconque des revendications 7 à 12.

14. Utilisation d'un mélange comprenant un polyester aliphatique, un polyester aliphatique-aromatique et un polyhydroxyalcanoate pour la préparation d'un article moulé par injection, dans lequel l'article moulé par injection est tel que défini dans l'une quelconque des revendications 1 à 6 et 13.

15. Utilisation d'un mélange comprenant un polyester aliphatique, un polyester aliphatique-aromatique et un polyhydroxyalcanoate pour le moulage par injection, dans lequel le polyester aliphatique est un succinate de polybutylène (PBS), le polyester aliphatique-aromatique est un adipate de polybutylène téréphtalate (PBAT) et le polyhydroxyalcanoate est un poly(3-hydroxybutyrate-co-3-hydroxyhexanoate) (PHBH).
